(19) Europäisches Patentamt
European Patent Office
Office européen des brevets

(11) **EP 4 431 982 A1**

(12) **EUROPEAN PATENT APPLICATION**

(43) Date of publication:
**18.09.2024 Bulletin 2024/38**

(21) Application number: **24163304.9**

(22) Date of filing: **13.03.2024**

(51) International Patent Classification (IPC):
**G01S 13/82** (2006.01)    **G01S 13/76** (2006.01)
**G01S 13/84** (2006.01)

(52) Cooperative Patent Classification (CPC):
**G01S 13/765; G01S 13/825; G01S 13/84**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.03.2023 US 202363489863 P**
**22.02.2024 US 202418583966**

(71) Applicant: **Qorvo US, Inc.**
**Greensboro, NC 27409 (US)**

(72) Inventors:
• **DOTLIC, Igor**
**Dublin, D08 T6YA (IE)**
• **MCLAUGHLIN, Michael**
**Dublin, D08 T6YA (IE)**

(74) Representative: **D Young & Co LLP**
**3 Noble Street**
**London EC2V 7BQ (GB)**

(54) **METHOD OF TIME-OF-FLIGHT RANGING BETWEEN WIRELESS DEVICES**

(57)    Disclosed are methods for time-of-flight (TOF) ranging between wireless devices using single-sided two-way ranging (SS-TWR) and double-sided TWR (DS-TWR) exchanges. The SS-TWR method involves performing the exchange between the wireless devices and determining a first path angle, a relative carrier frequency offset of the initiator and responder devices, and response delay of the responder. The method also involves determining a single SS-TWR delay and calculating a TOF delta from the determined information. Finally, the method involves calculating the TOF using the TOF delta with the single SS-TWR delay. The DS-TWR method eliminates the need for the relative carrier frequency estimation. Both methods enable accurate ranging between wireless devices by considering first path angles, and delays delay, which can be used in a variety of applications such as localization and tracking of objects. The method can be implemented on a processor of one or more of the wireless devices.

FIGURE 4

**EP 4 431 982 A1**

**Description**

Related Applications

This application claims the benefit of provisional patent application serial number 63/489,863, filed March 13, 2023, the disclosure of which is hereby incorporated herein by reference in its entirety.

Field of the Disclosure

The present disclosure relates to systems and methods for communication between devices and in particular to ranging exchanges between such devices.

Background

In the classic phase-based ranging, multiple tones or carrier frequency sweeps are used. The receiver would, typically, lock on the transmitter carrier frequency and then measure phase of arrival for the multiple tones or the carrier frequency sweep. The time of flight (TOF) is then resolved from the measured phases.

In the impulse radio, the TOF is typically measured by estimating the times of arrival and measuring the response times, i.e., without usage of any of phases of arrival. This is done without carrier frequencies necessarily being synchronized. However, the carrier frequency offset (CFO) is estimated in the reception and is compensated in the TOF estimation, either explicitly or implicitly.

The present disclosure shows how the phases of arrival, together with the measured response delays and CFOs, can be used in the impulse radio to provide high-precision TOF and downlink time difference of arrival (DL-TDOA) estimates.

The individual TOF and downlink time difference of arrival (DL-TDOA) estimates can be resolved up to half wavelength as in the classic phase-based ranging. The same holds for the differences between the consecutive TOFs or DL-TDOAs; these differences can be accumulated to get the estimate of the total TOF/DL-TDOA change, providing that each of these consecutive changes is below quarter wavelength. The estimate of the total TOF/DL-TDOA can be a sum of the initial classic impulse radio TOF/DL-TDOA estimate and the total change estimate, which is phase-based.

Summary

Particular embodiments are set out in the independent claims. Various optional examples are set out in the dependent claims. The present disclosure describes methods for time-of-flight (TOF) ranging between wireless devices using single-sided two-way ranging (SS-TWR) and double-sided TWR (DS-TWR) exchanges. The SS-TWR method involves performing the exchange between the wireless devices and determining a first path angle, a relative carrier frequency offset of the initiator and responder devices, and a response delay of the responder. The method also involves determining a single SS-TWR delay and calculating a TOF delta from the determined information. Finally, the method involves calculating the TOF using the TOF delta with the single SS-TWR delay. The DS-TWR method eliminates the need for the relative carrier frequency offset estimation. Both methods enable accurate ranging between wireless devices by taking into account first path angles, and delays, which can be used in a variety of applications such as localization and tracking of objects. The method can be implemented on a processor of one or more of the wireless devices.

In another aspect, any of the foregoing aspects individually or together, and/or various separate aspects and features as described herein, may be combined for additional advantage. Any of the various features and elements as disclosed herein may be combined with one or more other disclosed features and elements unless indicated to the contrary herein.

Those skilled in the art will appreciate the scope of the present disclosure and realize additional aspects thereof after reading the following detailed description of the preferred embodiments in association with the accompanying drawing figures.

Brief Description of the Drawing Figures

The accompanying drawing figures incorporated in and forming a part of this specification illustrate several aspects of the disclosure and, together with the description, serve to explain the principles of the disclosure.

FIG. 1 is a diagram illustrating double-sided two-way ranging (DS-TWR).
FIG. 2 illustrates phase-bases ranging that includes carrier frequency offset (CFO) estimate in single-sided two-way ranging (SS-TWR).

FIG. 3 is a graph illustrating phase-bases ranging in DS-TWR.

FIG. 4 is a flowchart illustrating a method for resolving times-of-flight (TOFs) employed by SS-TWR in accordance with the present disclosure.

FIG. 5 is a table of ranging results of using the methods for resolving times of flight disclosed in FIG. 4 and FIG 6.

FIG. 6 is a flowchart illustrating a method for resolving TOFs employed by DS-TWR in accordance with the present disclosure.

FIG. 7 depicts a packet structure used in TOF measurements during evaluation of the methods of the present disclosure.

FIG. 8 is a graph of carrier frequency offset (CFO) estimate in SS-TWR with automatic acknowledgment.

FIG. 9 is a graph of results for phase-based ranging with automatic acknowledgment.

FIG. 10 is a graph illustrating CFO estimates from devices and their exponential moving averages.

FIG. 11 is a graph illustrating DS-TWR and SS-TWR results without CFO compensation.

FIG. 12 is a graph illustrating DS-TWR and SS-TWR results with CFO compensation.

FIG. 13 is a diagram showing how the disclosed ranging methods may interact with user elements such as wireless communication devices.

Detailed Description

The embodiments set forth below represent the necessary information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

It will be understood that when an element such as a layer, region, or substrate is referred to as being "on" or extending "onto" another element, it can be directly on or extend directly onto the other element or intervening elements may also be present. In contrast, when an element is referred to as being "directly on" or extending "directly onto" another element, there are no intervening elements present. Likewise, it will be understood that when an element such as a layer, region, or substrate is referred to as being "over" or extending "over" another element, it can be directly over or extend directly over the other element or intervening elements may also be present. In contrast, when an element is referred to as being "directly over" or extending "directly over" another element, there are no intervening elements present. It will also be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

Relative terms such as "below" or "above" or "upper" or "lower" or "horizontal" or "vertical" may be used herein to describe a relationship of one element, layer, or region to another element, layer, or region as illustrated in the Figures. It will be understood that these terms and those discussed above are intended to encompass different orientations of the device in addition to the orientation depicted in the Figures.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Embodiments are described herein with reference to schematic illustrations of embodiments of the disclosure. As such, the actual dimensions of the layers and elements can be different, and variations from the shapes of the illustrations as a result, for example, of manufacturing techniques and/or tolerances, are expected. For example, a region illustrated or described as square or rectangular can have rounded or curved features, and regions shown as straight lines may have some irregularity. Thus, the regions illustrated in the figures are schematic and their shapes are not intended to illustrate the precise shape of a region of a device and are not intended to limit the scope of the disclosure. Additionally, sizes of structures or regions may be exaggerated relative to other structures or regions for illustrative purposes and, thus, are provided to illustrate the general structures of the present subject matter and may or may not be drawn to scale. Common elements between figures may be shown herein with common element numbers and may not be subsequently re-described.

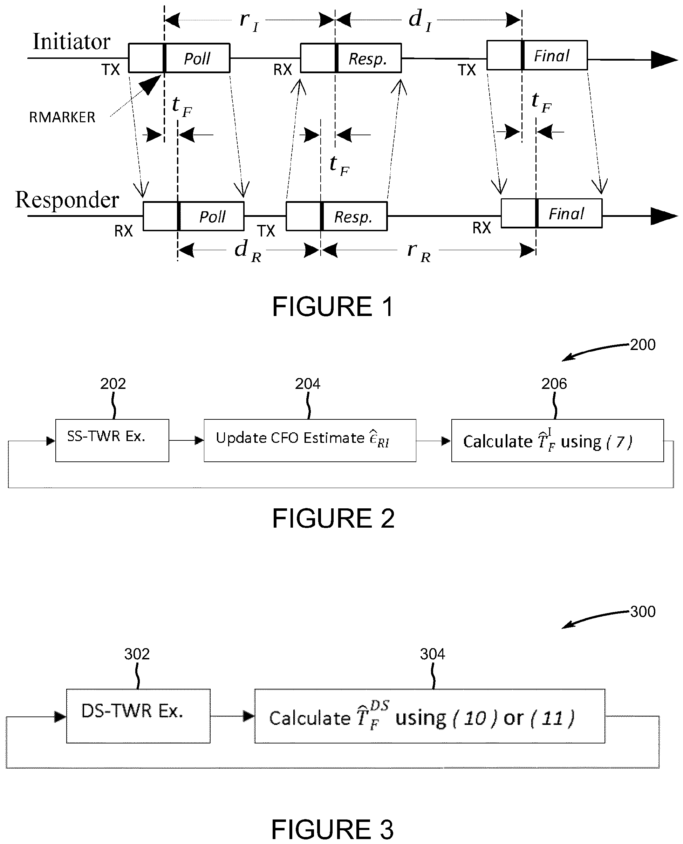

The method described in this disclosure is first applied in two-way ranging (TWR), specifically in single-sided TWR (SS-TWR). Double-sided TWR (DS-TWR), as shown in FIG. 1, is treated as two SS-TWRs. In more detail, the first SS-TWR consists of poll and response packets and is referred to as the SS-TWR initiator, since the initiator measures the round-trip time. Similarly, the second SS-TWR consists of response and final packets and is referred to as the SS-TWR responder, since the responder measures the round-trip time. As will be demonstrated, in DS-TWR, the dependency of the time of flight (TOF) estimate on the carrier frequency offset (CFO) estimate can be eliminated. SS-TWR expressions are derived for the SS-TWR initiator and are then applied to the

SS-TWR responder.

The following terms are used in the present disclosure:

$f_c$ - Carrier frequency of Initiator (Hz).

$\omega_c = 2\pi f_c$ - Circular carrier frequency of Initiator (radians/second).

$\Delta\omega_R$ - circular CFO (rad/s) of Responder relative to Initiator.

$\Delta\omega_T$ - circular CFO (rad/s) of Tag relative to Initiator.

$\epsilon_{RI} = \dfrac{\Delta\omega_R}{\omega_c}$ - relative CFO (skew) of Responder to Initiator (no unit).

$\epsilon_{IR} = -\dfrac{\Delta\omega_R}{\omega_c+\Delta\omega_R} \approx -\epsilon_{RI}$ - relative CFO (skew) of Initiator to Responder (no unit).

$\epsilon_{TI} = \dfrac{\Delta\omega_T}{\omega_c}$ - relative CFO (skew) of Tag to Initiator (no unit).

$\epsilon_{TR} = \dfrac{\Delta\omega_T-\Delta\omega_R}{\omega_c+\Delta\omega_R}$ - relative CFO (skew) of Tag to Responder (no unit).

$t_F$ - Time of flight (TOF) between Initiator and Responder (s).

$t_{IT}$ - TOF between Initiator and Tag (s).

$t_{RT}$ - TOF between Responder and Tag (s).

$t_D = t_{IT} - t_{RT}$ - Time difference of arrival (TDOA) between Initiator and Responder measured by Tag (s).

$\varphi_P^R$ - First path angle (FPA) of Poll packet measured by Responder (rad).

$\varphi_R^I$ - FPA of Response packet measured by Initiator (radians).

$\varphi_F^R$ - FPA of Final packet measured by Responder (radians).

$\varphi_P^T$ - FPA of Poll packet measured by Tag (radians).

$\varphi_R^T$ - FPA of Response packet measured by Tag (radians).

$\varphi_F^T$ - FPA of Final packet measured by Tag (radians).

$d_I$ - Response delay of Initiator (s).

$d_R$ - Response delay of Responder (seconds).

$r_I = 2t_F + d_R$ - Round-trip time of Initiator (seconds).

$r_R = 2t_F + d_I$ - Round-trip time of Responder (seconds).

$\Delta(\cdot)$ - Change of a given variable between consecutive TWRs. $\overline{(\cdot)}$ - Mean value of a variable across TWRs.

$\widehat{(\cdot)}$ - Estimate of a given variable.

$\lambda$ - Wavelength (meters).

$\theta_R$ - Initial oscillator phase offset of Responder to Initiator (radians).

$\theta_T$ - Initial oscillator phase offset of Tag to Initiator (radians).

$x$(mod $v$) - Unbiased modulus of x with respect to $v$; the result is always in $[-\frac{v}{2}, +\frac{v}{2})$ interval; calculated as $\left(x + \frac{v}{2}\right) \% v - \frac{v}{2}$. Here, "%" represents the standard modulus operation that produces results in $[0, v)$ interval.

Assumptions are made as follows:

- Transmitter oscillator phase is given to a pulse at the time of transmission.
- Receiver oscillator phase is removed from a pulse at the time of reception.
- Receiver conjugates resulting phasors. Therefore, reported first phase in the accumulator is the transmitter oscillator phase at the time of transmission subtracted from the receiver oscillator phase in the time of reception.
- The whole preamble is observed as a single pulse.
- The effect or correlation before CFO removal is observed via the main lobe phase of the ambiguity function of the code used.
- Phase transitions between preambles should cancel out on two sides, as relative CFOs are approximately the same with opposite signs, so they are not included in the analysis.
- CFO is constant during a TWR; however, CFO can change between consecutive TWRs.

**Derivation of the Basic TOF Estimation Method in SS-TWR**

First, consider the SS-TWR Initiator, consisting of Poll and Response packets.

Oscillator of Initiator has the following form:

$$O_I(t) = \exp(j\omega_c t). \tag{1}$$

Oscillator of Responder has the following form:

$$O_R(t) = \exp(j(\omega_c + \Delta\omega_R)t + \theta_R). \tag{2}$$

Initiator transmits Poll packet at $t = 0$, in Responder receives at $t = t_F$. Hence, the measured first phase angle in the Responder will be

$$\varphi_P^R = (\omega_c + \Delta\omega_R)t_F + \theta_R. \tag{3}$$

At $d_R + t_F$, Responder is transmitting Response packet, and Initiator is receiving at $r_I$.

Hence, the first phase in Initiator's accumulator will have a phase

$$\varphi_R^I = \omega_c r_I - (\omega_c + \Delta\omega_R)(d_R + t_F) - \theta_R. \tag{4}$$

By adding up $\varphi_P^R$ and $\varphi_R^I$ one gets

$$\varphi_P^R + \varphi_R^I = 2t_F\omega_c - \Delta\omega_R d_R. \tag{5}$$

By having $\Phi_I = \frac{\varphi_P^R + \varphi_R^I}{2\pi}$ as a normalized angle, $D_R = f_c d_R$ and $T_F = 2f_c t_F$, being respective times normalized to carrier cycle, or, equivalently, distances normalized to $\lambda$, the above equation becomes:

$$\Phi_I = T_F - \epsilon_{RI} D_R. \tag{6}$$

Since $\Phi_I$ is resolvable on an interval of length one, the above equation can be used to provide a $T_F$ estimate, again, resolvable on an interval of length one,

$$\hat{T}_F^I = \left(\hat{\Phi}_I + \hat{\epsilon}_{RI}\hat{D}_R\right)(\mathrm{mod}\ 1). \tag{7}$$

By following an equivalent line of derivation for the SS-TWR Responder, one obtains

$$\Phi_R = T_F - \epsilon_{IR}D_I, \tag{8}$$

where $\Phi_R = \dfrac{\varphi_R^I + \varphi_F^R}{2\pi}$ and $D_I = f_c d_I$. The basic phase-based SS-TWR loop 200 is shown in FIG. 2. The SS-TWR loop 200 begins with an exchange between wireless devices (step 202). Next, a carrier frequency offset is updated (step 204). Then a time-of-flight (TOF) using equation 7 (step 206) is calculated.

**Derivation of the Basic TOF Estimation Method in DS-TWR**

Considering that $\varepsilon_{IR} \approx -\varepsilon_{RI}$, if DS-TWR is done, one can eliminate CFO from (6) and (8) and solve for $T_F$:

$$T_F = k_I\Phi_I + k_R\Phi_R. \tag{9}$$

Here, $k_I = \dfrac{D_I}{D_I+D_R} = \dfrac{d_I}{d_I+d_R}$ and $k_R = \dfrac{D_R}{D_I+D_R} = \dfrac{d_R}{d_I+d_R} = 1 - k_I$.

Hence DS-TWR T_F estimate can be derived from (9):

$$\hat{T}_F^{DS} = \hat{k}_I\hat{\Phi}_I(\mathrm{mod}\ 1) + \hat{k}_R\hat{\Phi}_R(\mathrm{mod}\ 1). \tag{10}$$

If response delays change little, (10) can be written as

$$\hat{T}_F^{DS} \approx \bar{k}_I\hat{\Phi}_I(\mathrm{mod}\ 1) + \bar{k}_R\hat{\Phi}_R(\mathrm{mod}\ 1). \tag{11}$$

The basic phase-based SS-TWR loop 300 is shown in FIG. 3. The DS-TWR loop 300 begins with an exchange between wireless devices (step 302). Next, a time-of-flight (TOF) using either equation 10 or equation 11 (step 304) is calculated.

**Derivation of the Basic DL-TDOA Estimation Method**

SS-TWR

In DL-TDOA, the Tag is listening to SS-TWR exchange between Initiator and Responder with the intent to calculate $t_D$. This will be analyzed on the SS-TWR Initiator and then applied to the SS-TWR Responder as done for the $t_F$ estimation above.

The Oscillator of Tag has a form:

$$O_T(t) = \exp(j(\omega_c + \Delta\omega_T)\,t + \theta_T). \tag{12}$$

The Poll packet is transmitted at $t = 0$ and received at $t = t_{IT}$. Therefore, the first phase in Tag's accumulator will have a phase

$$\varphi_P^T = (\omega_c + \Delta\omega_T)t_{IT} + \theta_T. \tag{13}$$

At $d_R + t_F$ the Responder is transmitting the Response packet, and the Tag is receiving it at $d_R + t_F + t_{RT}$.

Hence, the first phase in the Tag's accumulator will have a phase

$$\varphi_R^T = (\omega_c + \Delta\omega_T)(d_R + t_F + t_{RT}) + \theta_T - (\omega_c + \Delta\omega_R)(d_R + t_F) - \theta_R. \qquad (14)$$

Subtracting (14) and (3) from (13) yields

$$\varphi_P^T - \varphi_R^T - \varphi_P^R = (\omega_c + \Delta\omega_T)(t_D - t_F) + (\Delta\omega_R - \Delta\omega_T)d_R. \qquad (15)$$

Having $T_D = f_c t_D$ and $\Phi_{IT} = \dfrac{\varphi_P^T - \varphi_R^T - \varphi_P^R}{2\pi}$ transforms (15) in

$$\Phi_{IT} = (1 + \epsilon_{TI})\left(T_D - \frac{T_F}{2}\right) + (\epsilon_{RI} - \epsilon_{TI})D_R. \qquad (16)$$

Since $\varepsilon_{TI} \ll 1$ and $\varepsilon_{RI} - \varepsilon_{TI} \approx -\varepsilon_{TR}$, the above expression can be approximated as

$$\Phi_{IT} \approx T_D - \frac{T_F}{2} - \epsilon_{TR}D_R. \qquad (17)$$

Hence, estimating $T_D$ from (17) for the Initiator SS-TWR yields

$$\hat{T}_D^I \approx \left(\hat{\Phi}_{IT} + \frac{\hat{T}_F}{2} + \hat{\epsilon}_{TR}\hat{D}_R\right)(\mathrm{mod}\ 1). \qquad (18)$$

Following an equivalent line of derivation as above for SS-TWR, the Responder yields

$$\Phi_{RT} = (1 + \epsilon_{TR})\left(-T_D - \frac{T_F}{2}\right) + (\epsilon_{IR} - \epsilon_{TR})D_I, \qquad (19)$$

and

$$\Phi_{RT} \approx -T_D - \frac{T_F}{2} - \epsilon_{TI}D_I, \qquad (20)$$

where $\Phi_{RT} = \dfrac{\varphi_R^T - \varphi_F^T - \varphi_R^I}{2\pi}$.

<u>DS-TWR</u>

Multiplying (17) by D, and (20) by $D_R$ and subtracting, and then using (7) and (8) to eliminate $\varepsilon_{IR} \approx \varepsilon_{TR} - \varepsilon_{TI}$ and solving for $T_D$, yields

$$T_D \approx k_I\left(\Phi_{IT} + \frac{\Phi_I}{2}\right) - k_R\left(\Phi_{RT} + \frac{\Phi_R}{2}\right). \qquad (21)$$

Therefore, DL-TDOA from DS-TWR can be done without the CFO estimation, like TOF from the DS-TWR. The DS-TWR $T_D$ estimate from (21) is

$$\hat{T}_D^{DS} = \hat{k}_I \left( \widehat{\Phi}_{IT} + \frac{\Phi_I}{2} \right) \left( \text{mod}\frac{1}{2} \right) - \hat{k}_R \left( \widehat{\Phi}_{RT} + \frac{\Phi_R}{2} \right) \left( \text{mod}\frac{1}{2} \right). \tag{22}$$

Here, $\left( \text{mod}\frac{1}{2} \right)$ is used as all the normalized angles in (22) are resolvable on the interval of length one. Halving $\hat{\Phi}_I$ and $\hat{\Phi}_R$ makes the results resolvable on intervals of $\frac{1}{2}$ and thus makes sums of $\widehat{\Phi}_{IT} + \frac{\Phi_I}{2}$ and $\widehat{\Phi}_{RT} + \frac{\Phi_R}{2}$ also resolvable on $\frac{1}{2}$ intervals.

If the response delays change little, (22) can be written as

$$\hat{T}_D^{DS} = \bar{k}_I \left( \widehat{\Phi}_{IT} + \frac{\Phi_I}{2} \right) \left( \text{mod}\frac{1}{2} \right) - \bar{k}_R \left( \widehat{\Phi}_{RT} + \frac{\Phi_R}{2} \right) \left( \text{mod}\frac{1}{2} \right). \tag{23}$$

**Method of Resolving TOF (TDOA) Changes from TWR-to-TWR Exchange**

If a change between consecutive $T_F$ or $T_D$ measurements is always in a $\left( -\frac{v}{2}, +\frac{v}{2} \right)$ interval; that is, if it can be completely resolved by differentiating consecutive $T_F$ or $T_D$ estimates with (mod v), then consecutive deltas are integrated to get the overall $T_F$ or $T_D$ estimate. TOF SS-TWR

From (7) the following is obtained:

$$\Delta\hat{T}_F^I = \left( \Delta\widehat{\Phi}_I + \Delta\left(\hat{\epsilon}_{RI}\hat{D}_R\right) \right)(\text{mod } 1) \approx \left( \Delta\widehat{\Phi}_I + \Delta\hat{\epsilon}_{RI}\,\bar{D}_R + \hat{\epsilon}_{RI}\Delta\hat{D}_R \right)(\text{mod } 1). \tag{24}$$

The expressions above can be further approximated depending on the ratios of the two CFO-dependent addends and the standard deviation of $\Delta\widehat{\Phi}_I$.

In SS-TWRs with typical response times of 1 ms to 2 ms and $\left| \delta d_I^k \right| \leq 4$ ns, $\hat{\epsilon}_{RI}\Delta\hat{D}_R$ can be usually neglected:

$$\Delta\hat{T}_F^I = \left( \Delta\widehat{\Phi}_I + \Delta\hat{\epsilon}_{RI}\,\bar{D}_R \right)(\text{mod } 1). \tag{25}$$

Furthermore, if auto-acknowledgment (auto-ACK) SS-TWR is used, $\Delta\hat{\epsilon}_I\,\bar{D}_R$ can also be neglected; hence,

$$\Delta\hat{T}_F^I = \Delta\widehat{\Phi}_I\,(\text{mod } 1). \tag{26}$$

In SS-TWR with typical response times, summation of deltas can be done as

$$\hat{T}_F^I = \sum\Delta\hat{T}_F^I = \sum(\Delta\widehat{\Phi}_I(\text{mod } 1)) + \bar{D}_R\sum\Delta\hat{\epsilon}_{RI} = \sum(\Delta\widehat{\Phi}_I(\text{mod } 1)) + \bar{D}_R(\hat{\epsilon}_{RI} - \hat{\epsilon}_{RI}^0). \tag{27}$$

Therefore, the estimate of influence of the change of CFO can be done separately. As will be seen in the measurement results, CFO estimate directly from the chip is too noisy. However, since the CFO estimate changes slowly TWR to TWR, averaging can be used. More precisely, exponential moving averaging, as the simplest form of moving averaging, has proved to be good enough.

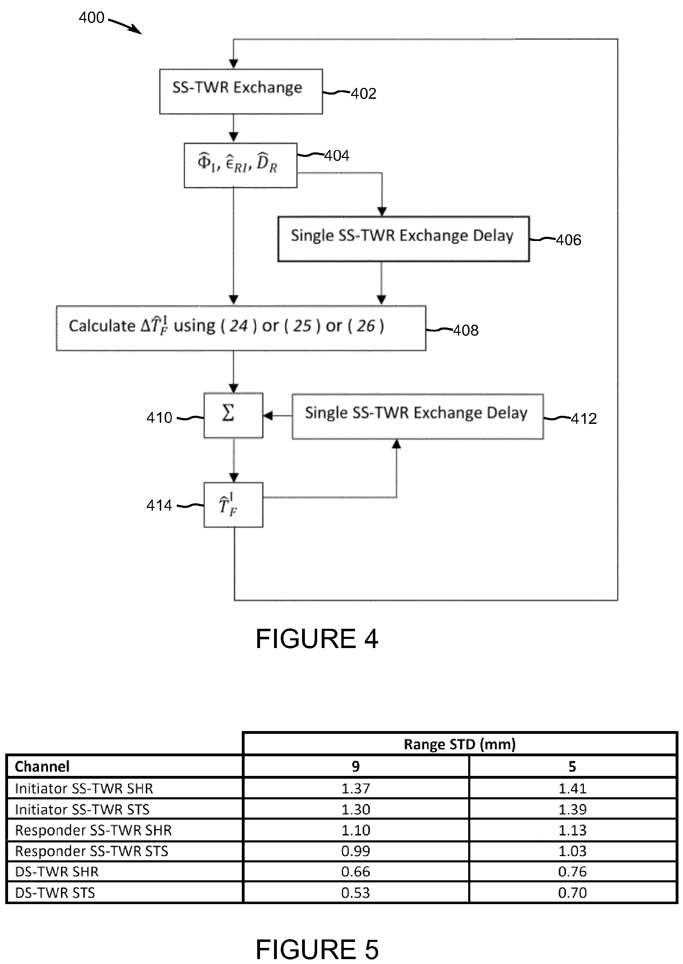

FIG. 4 is a flowchart illustrating a method 400 for resolving consecutive TOFs employed by SS-TWR in accordance with the present disclosure. The method begins with an SS-TWR exchange between wireless devices (step 402).

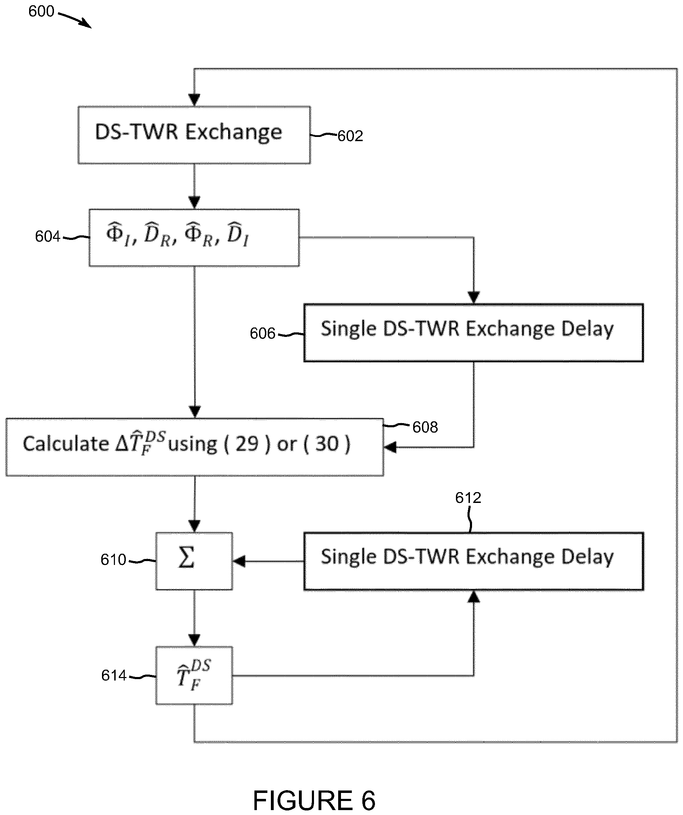

Next, a processor of at least one of the wireless devices determines a first path angle, a relative carrier frequency offset of an initiator of one of the wireless devices and a responder of one of the wireless devices, and a response delay of the responder (step 404). A single SS-TWR exchange delay is determined (step 406). A next step performed by the processor is to calculate a TOF delta using the determined information from the previous step using equations (24) or (25) or (26) (step 408). Next, the TOF delta is summed (step 410) with the single SS-TWR exchange delay (step 412). A TOF is then calculated from the results of the previous steps (step 414). FIG. 5 is a table of ranging results of using the method for resolving time of flights disclosed in FIG. 4 and FIG 6.

TOF DS-TWR

In DS-TWR, CFO estimates are not needed. Hence,

$$\hat{T}_F^{DS} = \sum(\Delta \hat{T}_F^{DS} (\text{mod } 1)). \tag{28}$$

Here, $\Delta \hat{T}_F^{DS}$ represents change of consecutive $\hat{T}_F^{DS}$ defined by (10) or (11). If (10) is used, $\Delta \hat{T}_F^{DS}$ is calculated as

$$\Delta \hat{T}_F^{DS} = \Delta \left( \hat{k}_I \hat{\Phi}_I + \hat{k}_R \hat{\Phi}_R \right) (\text{mod } 1). \tag{29}$$

If (11) is used, $\Delta \hat{T}_F^{DS}$ can be written as

$$\Delta \hat{T}_F^{DS} = \bar{k}_I \Delta \hat{\Phi}_I (\text{mod } 1) + \bar{k}_R \Delta \hat{\Phi}_R (\text{mod } 1). \tag{30}$$

In this case, (mod 1) in (28) is redundant. FIG. 6 is a flowchart illustrating a method 600 for resolving consecutive TOFs employed by DS-TWR in accordance with the present disclosure. The method begins with a DS-TWR exchange between wireless devices (step 602). Next, a processor of at least one of the wireless devices determines a first path angle, a first path angle of an initiator of one of the wireless devices, a response delay of the responder, a first path angle of the responder, and a delay due to the initiator (step 604). A single DS-TWR exchange delay is determined (step 606). A next step performed by the processor is to calculate a TOF delta using the determined information from the previous step (step 608). Next, the TOF delta is summed (step 610) with the single DS-TWR exchange delay (step 612). A TOF is then calculated from the results of the previous steps (step 614).

DL-TDOA SS-TWR

Considering that in downlink time difference of arrival (DL-TDOA) the initiator and responder should act as stationary anchors, then $\Delta T_F = 0$, (18) yields

$$\Delta \hat{T}_D^I = \left( \Delta \hat{\Phi}_{IT} + \Delta \left( \hat{\epsilon}_{TR} \bar{D}_R \right) \right) (\text{mod } 1) \approx \left( \Delta \hat{\Phi}_{IT} + \Delta \hat{\epsilon}_{TR} \bar{D}_R + \hat{\epsilon}_{TR} \Delta \hat{D}_R \right) (\text{mod } 1). \tag{31}$$

In SS-TWRs with typical response times of 1 ms to 2 ms and $\left| \delta d_I^k \right| \leq 4 \text{ ns}$, $\varepsilon_{TR} \Delta \hat{D}_R$ can be usually neglected:

$$\Delta \hat{T}_D^I = \left( \Delta \hat{\Phi}_{IT} + \Delta \hat{\epsilon}_{TR} \bar{D}_R \right) (\text{mod } 1). \tag{32}$$

Furthermore, if auto-ACK SS-TWR is used, $\Delta \hat{\varepsilon}_I \bar{D}_R$ can be also neglected; hence,

$$\Delta \hat{T}_D^I = \Delta \hat{\Phi}_{IT} (\text{mod } 1). \tag{33}$$

In SS-TWR with typical response times, summation of deltas can be done as follows:

$$\hat{T}_D^{\mathrm{I}} = \sum \Delta \hat{T}_D^{\mathrm{I}} = \sum (\Delta \hat{\Phi}_{IT}(\mathrm{mod}\ 1)) + \bar{D}_R \sum \Delta \hat{\epsilon}_{\mathrm{TR}} = \sum (\Delta \hat{\Phi}_{IT}(\mathrm{mod}\ 1)) + \bar{D}_R(\hat{\epsilon}_{\mathrm{TR}} - \hat{\epsilon}_{\mathrm{TR}}^0).$$

$$(34)$$

DL-TDOA DS-TWR

In DS-TWR, CFO estimates are not needed. Hence,

$$\hat{T}_D^{DS} = \sum \left( \Delta \hat{T}_D^{DS} \left( \mathrm{mod}\frac{1}{2} \right) \right).$$ 

$$(35)$$

Here, $\Delta \hat{T}_D^{DS}$ represents the change of consecutive $\hat{T}_D^{DS}$ defined by (22) and (23). If (23) is used, $\Delta \hat{T}_D^{DS}$ can be written as

$$\Delta \hat{T}_D^{DS} = \bar{k}_I \left( \Delta \hat{\Phi}_{IT} + \frac{\Delta \hat{\Phi}_I}{2} \right) \left( \mathrm{mod}\frac{1}{2} \right) - \bar{k}_R \left( \Delta \hat{\Phi}_{RT} + \frac{\Delta \hat{\Phi}_R}{2} \right) \left( \mathrm{mod}\frac{1}{2} \right).$$

$$(36)$$

In this case, $\left( \mathrm{mod}\frac{1}{2} \right)$ in (35) is redundant.

**MEASUREMENT RESULTS**

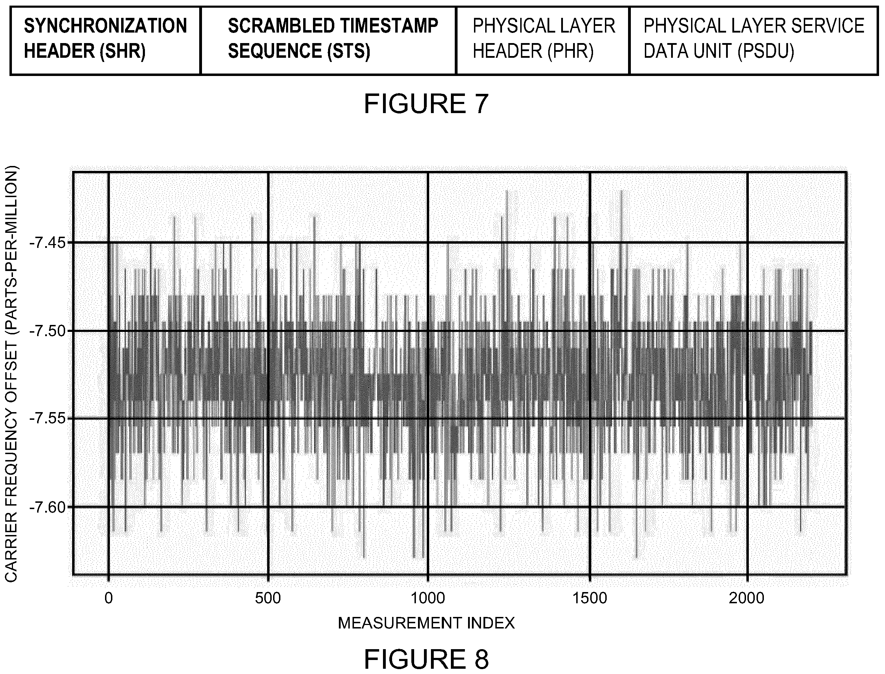

The IEEE 802.15.4z high-rate pulse (HRP) physical layer (PHY) packet structure used in the measurements is shown in FIG. 7. The HRP PHY consists of the two fields used for channel impulse response (CIR) and thus TOA estimation: synchronization header (SHR) and scrambled timestamp sequence (STS); the other two fields are used for data transfer: physical layer header (PHR) and physical layer service data unit (PSDU).

SS-TWR with Auto-Ack

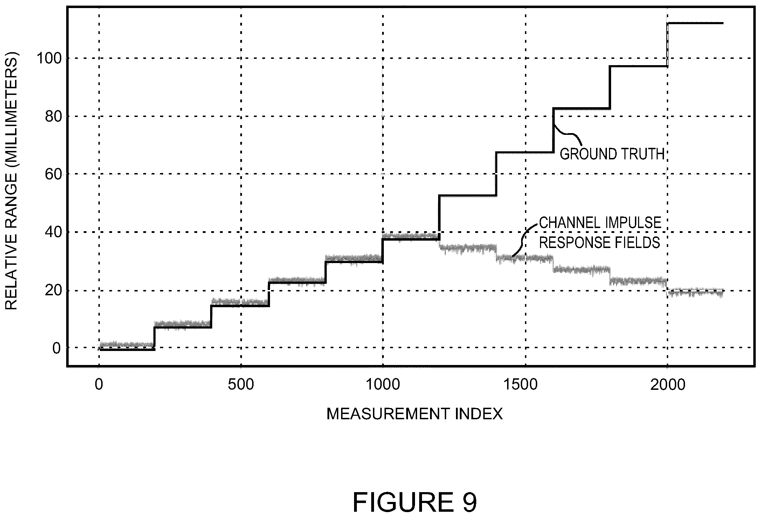

A wired test was performed on channel 9. A programmable delay line was used to set the "Ground Truth." Expression (26) was used to calculate $\Delta \hat{T}_F^{\mathrm{I}}$. Auto-ACK has $\bar{d}_R \approx 0.306$ ms and $\left| \delta d_R^k \right| \leq 4$ ns. As can be seen in FIG. 8, CFO is stable and thus does not affect the results significantly. The results are shown in FIG. 9. As expected, changes of range smaller than $\frac{\lambda}{4}$ are successfully resolved, whereas those larger than $\frac{\lambda}{4}$ wrap around.

SS-TWR and DS-TWR on Embedded Code

This measurement was done on channel 9 over the air with the two devices doing DS-TWR. The response delays were $\bar{d}_R \approx 2.38$ ms and $\bar{d}_I \approx 1.62$ ms, again with $\left| \delta d_R^k \right| \leq 4$ ns and $\left| \delta d_I^k \right| \leq 4$ ns.

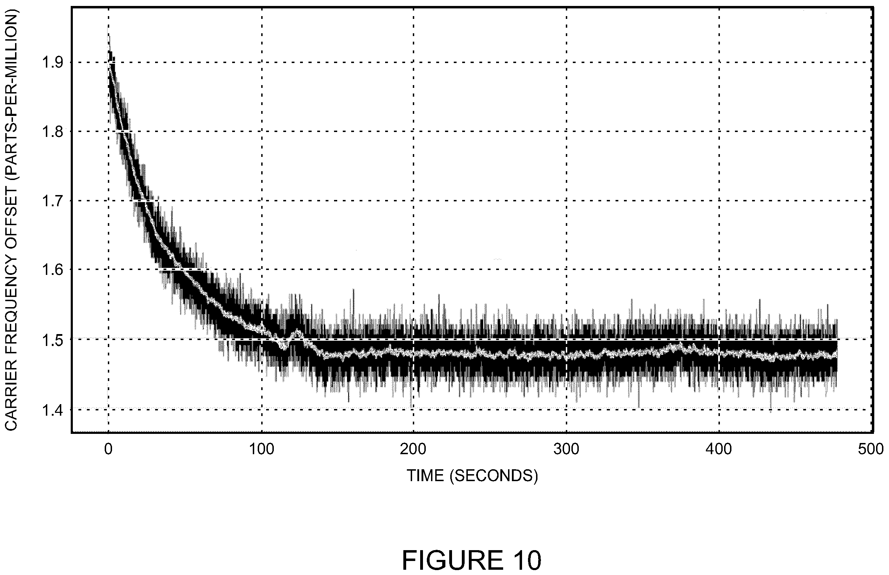

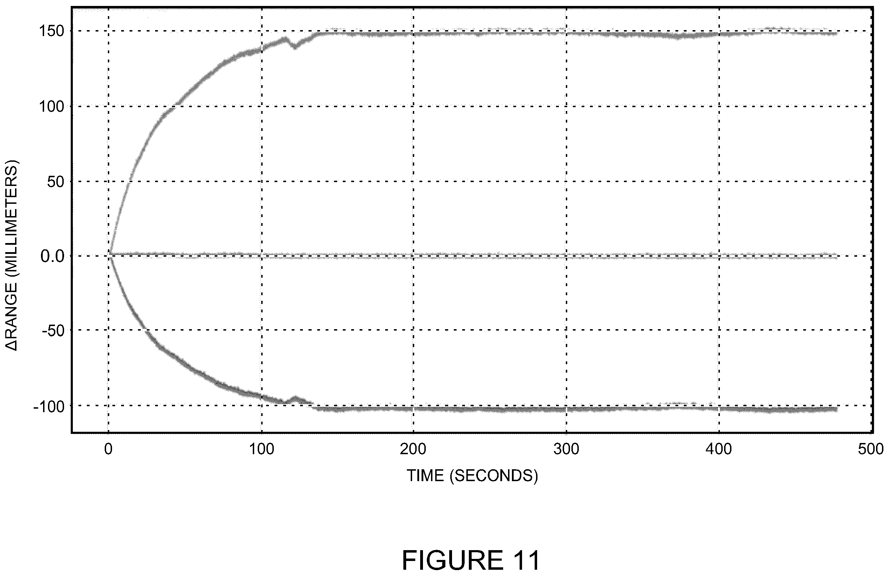

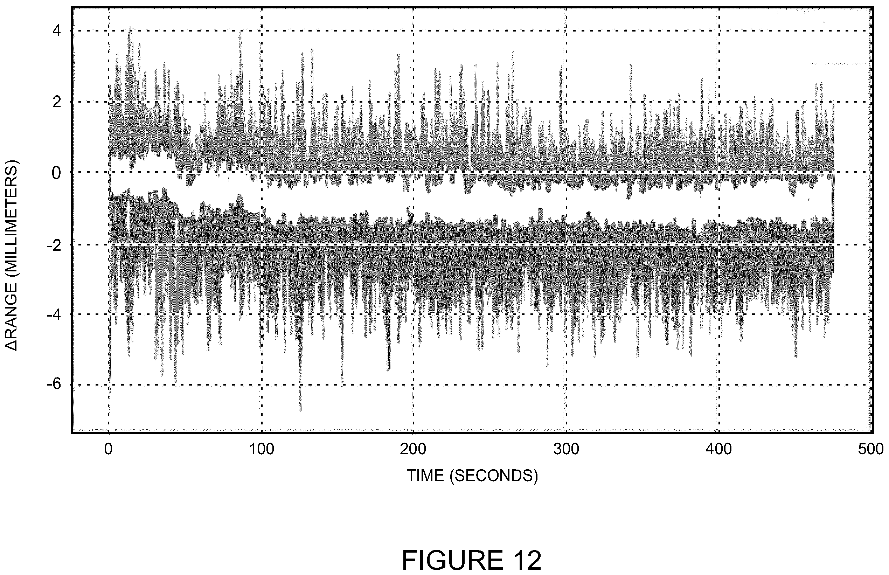

The devices' crystals go through a heating-up phase and CFO changes over time, as shown in FIG. 10. The results displayed in FIG. 11 are calculated according to (26) and (29) for SS-TWR and DS-TWR, respectively. As shown, SS-TWR is very sensitive to changes in CFO, whereas DS-TWR is completely immune. To compensate for CFO, in FIG. 12 for SS-TWR (27) is used with CFO estimate being the result of exponential moving average (EMA) filtering, as shown in FIG. 10.

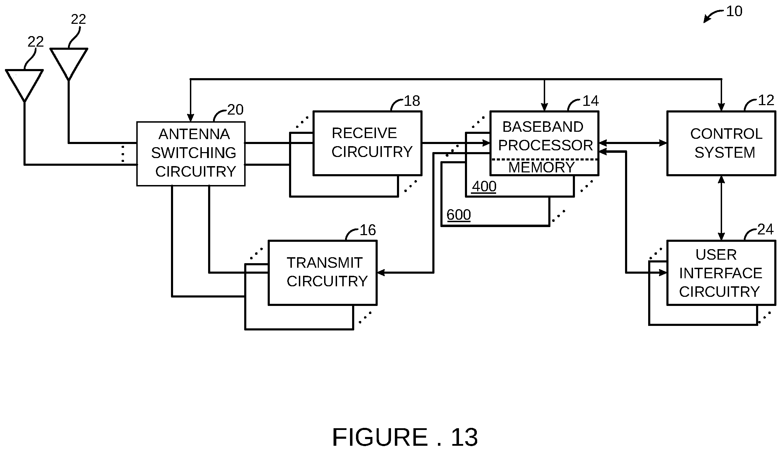

With reference to FIG. 13, the concepts described above may be implemented in various types of wireless communication devices or user elements 10, such as mobile terminals, smart watches, tablets, computers, navigation devices, access points, and the like that support wireless communications, such as cellular, wireless local area network (WLAN), Bluetooth, near-field communications, and ultra-wideband ranging. The user elements 10 will generally include a control system 12, a baseband processor 14 has memory that is configured to store executable instructions for the SS-TWR method 400 (FIG. 4) and/or the DS-TWR method 600 (FIG. 6), transmit circuitry 16, receive circuitry 18, antenna switching circuitry 20, multiple antennas 22, and user interface circuitry 24. The receive circuitry 18 receives radio frequency signals including ultra-wide bandwidth signals via the antennas 22 and through the antenna switching circuitry 20 from one or more basestations and or other wireless communication devices configured like wireless communication device 10. A low-noise amplifier and a filter cooperate to amplify and remove broadband interference from the received signal for processing. Downconversion and digitization circuitry (not shown) will then downconvert the filtered, received signal to an intermediate or baseband frequency signal, which is then digitized into one or more digital streams.

The baseband processor 14 processes the digitized received signal to extract the information or data bits conveyed in the received signal. This processing typically comprises demodulation, decoding, and error correction operations. In embodiments of the present disclosure, the baseband processor is further configured to execute the executable instructions for the SS-TWR method 400 and/or the DS-TWR method 600 to determine range by way of time-of-flight of radio signals transmitted and received between one or more wireless communication devices configured like wireless communication device 10. The baseband processor 14 is generally implemented in one or more digital signal processors and application-specific integrated circuits.

For transmission, the baseband processor 14 receives digitized data, which may represent voice, data, or control information, from the control system 12, which it encodes for transmission. The encoded data is output to the transmit circuitry 16, where it is used by a modulator to modulate a carrier signal that is at a desired transmit frequency or frequencies, such as ultra-wideband frequencies, which span 3.1 GHz to 10.5 GHz. The bandwidth of ultra-wideband is greater than 500 MHz.

A power amplifier will amplify the modulated carrier signal to a level appropriate for transmission and deliver the modulated carrier signal through the antenna switching circuitry 20 to the antennas 22. The antennas 22 and the replicated transmit circuitry 16 and receive circuitry 18 may provide spatial diversity. Modulation and processing details will be understood by those skilled in the art.

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

It is contemplated that any of the foregoing aspects, and/or various separate aspects and features as described herein, may be combined for additional advantage. Any of the various embodiments as disclosed herein may be combined with one or more other disclosed embodiments unless indicated to the contrary herein.

Those skilled in the art will recognize improvements and modifications to the preferred embodiments of the present disclosure. All such improvements and modifications are considered within the scope of the concepts disclosed herein and the claims that follow.

Thus, from one perspective, there have now been described methods for time-of-flight (TOF) ranging between wireless devices using single-sided two-way ranging (SS-TWR) and double-sided TWR (DS-TWR) exchanges. The SS-TWR method involves performing the exchange between the wireless devices and determining a first path angle, a relative carrier frequency offset of the initiator and responder devices, and response delay of the responder. The method also involves determining a single SS-TWR delay and calculating a TOF delta from the determined information. Finally, the method involves calculating the TOF using the TOF delta with the single SS-TWR delay. The DS-TWR method eliminates the need for the relative carrier frequency estimation. Both methods enable accurate ranging between wireless devices by considering first path angles, and delays delay, which can be used in a variety of applications such as localization and tracking of objects. The method can be implemented on a processor of one or more of the wireless devices.

Further examples of feature combinations taught by the present disclosure are set out in the following numbered clauses:

1. A method of time-of-flight (TOF) ranging between wireless devices comprising:

- performing by way of the wireless devices a single-sided two-way ranging (SS-TWR) exchange between the wireless devices;
- determining by way of a processor of at least one of the wireless devices a first path angle, a relative carrier frequency offset of an initiator of one of the wireless devices and a responder of one of the wireless devices, and response delay of the responder;
- determining by way of the processor a single SS-TWR delay;
- calculating by way of the processor a TOF delta from the determined information; and
- calculating by way of the processor a TOF by way of the TOF delta with the single SS-TWR delay.

2. The method of TOF ranging between wireless devices of clause 1 further comprising:

- measuring a plurality of measured carrier frequency offsets (CFOs) by way of one or both of the wireless devices;
- estimating a CFO between the two wireless devices using a filter to filter the measured CFOs to generate an estimated CFO; and
- adjusting the timing measurement based on the estimated CFO to improve range estimation accuracy.

3. The method of TOF ranging between wireless devices of clause 2 wherein the filter is an exponential moving average filter.

4. The method of TOF ranging between wireless devices of clause 1 wherein the TOF delta is calculated by way of the processor using the equation $\Delta \hat{T}_F^I = \left( \Delta \hat{\Phi}_I + \Delta \left( \hat{\epsilon}_{RI} \hat{D}_R \right) \right) (\mathrm{mod}\ 1) \approx (\Delta \hat{\Phi}_I + \Delta \hat{\epsilon}_{RI} \overline{D}_R + \hat{\epsilon}_{RI} \Delta \hat{D}_R)\ (\mathrm{mod}\ 1)$.

5. The method of TOF ranging between wireless devices of clause 1 wherein the TOF delta is calculated by way of the processor using the equation $\Delta \hat{T}_F^I = \left( \Delta \hat{\Phi}_I + \Delta \hat{\epsilon}_{RI} \overline{D}_R \right) (\mathrm{mod}\ 1)$.

6. The method of TOF ranging between wireless devices of clause 1 wherein the TOF delta is calculated by way of the processor using the equation $\Delta \hat{T}_F^I = \Delta \hat{\Phi}_I\ (\mathrm{mod}\ 1)$.

7. The method of TOF ranging between wireless devices of clause 1 wherein the wireless devices are configured as anchors for downlink time difference of arrival (DL-TDOA) operation and a TDOA delta is calculated by way of the processor using the equation $\Delta \hat{T}_D^I = (\Delta \hat{\Phi}_{IT} + \Delta(\hat{\epsilon}_{TR} \hat{D}_R)) (\mathrm{mod}\ 1) \approx (\Delta \hat{\Phi}_{IT} + \Delta \hat{\epsilon}_{TR} \overline{D}_R + \hat{\epsilon}_{TR} \Delta \hat{D}_R)\ (\mathrm{mod}\ 1)$.

8. The method of TOF ranging between wireless devices of clause 1 wherein the wireless devices are configured as anchors for DL-TDOA operation and a TDOA delta is calculated by way of the processor using the equation $\Delta \hat{T}_D^I = \left( \Delta \hat{\Phi}_{IT} + \Delta \hat{\epsilon}_{TR} \overline{D}_R \right) (\mathrm{mod}\ 1)$.

9. The method of TOF ranging between wireless devices of clause 1 wherein the wireless devices are configured as anchors for DL-TDOA operation and a TDOA delta is calculated by way of the processor using the equation $\Delta \hat{T}_D^I = \Delta \hat{\Phi}_{IT}\ (\mathrm{mod}\ 1)$.

10. A wireless communication device for time-of-flight (TOF) ranging between other wireless communication devices comprising:

- receive circuitry configured to receive radio frequency (RF) signals;
- transmit circuitry configured to modulate a carrier signal with encoded data; and
- a baseband processor configured to:

  - process a digitized version of the RF signals received by the receive circuitry and to extract the information or data bits conveyed in the received RF signals;
  - determine a first path angle, a relative carrier frequency offset of an initiator of one of the wireless communication devices and a responder of one of the wireless communication devices, and a response delay of the responder;
  - determine a single single-sided two-way ranging (SS-TWR) delay;
  - calculate a TOF delta from the determined information; and
  - calculate a TOF using the TOF delta with the single SS-TWR delay.

11. The wireless communication device for TOF ranging between other wireless communication devices of clause 10 wherein the baseband processor is further configured to:

- measure a plurality of measured carrier frequency offsets (CFOs);
- estimate a CFO between the two wireless communication devices using a filter to filter the measured CFOs to generate an estimated CFO; and
- adjust the timing measurement based on the estimated CFO to improve range estimation accuracy.

12. The wireless communication device for TOF ranging between other wireless communication devices of clause 10 wherein the filter is an exponential moving average filter.

13. The wireless communication device for TOF ranging between other wireless communication devices of clause 10 wherein the TOF delta is calculated by way of the baseband processor using the equation

$$\Delta \widehat{T}_F^I = \left( \Delta \widehat{\Phi}_I + \Delta \left( \hat{\epsilon}_{RI} \widehat{D}_R \right) \right) (\mathrm{mod}\ 1) \approx \left( \Delta \widehat{\Phi}_I + \Delta \hat{\epsilon}_{RI}\ \overline{D}_R + \hat{e}_{RI}\Delta\hat{D}_R \right) (\mathrm{mod}\ 1).$$

14. The wireless communication device for TOF ranging between other wireless communication devices of clause 10 wherein the TOF delta is calculated by way of the baseband processor using the equation

$$\Delta \widehat{T}_F^I = \left( \Delta \widehat{\Phi}_I + \Delta \hat{\epsilon}_{RI}\ \overline{D}_R \right) (\mathrm{mod}\ 1)$$
.

15. The wireless communication device for ranging between other wireless communication devices of clause 10 wherein the TOF delta is calculated by way of the baseband processor using the equation $\Delta \widehat{T}_F^I = \Delta \widehat{\Phi}_I\ (\mathrm{mod}\ 1)$.

16. The wireless communication device for ranging between other wireless communication devices of clause 10 wherein the wireless communication devices are configured as anchors for downlink time difference of arrival (DL-TDOA) operation and a TDOA delta is calculated by way of the baseband processor using the equation

$$\Delta \widehat{T}_D^I = \left( \Delta \widehat{\Phi}_{IT} + \Delta \left( \hat{\epsilon}_{TR} \widehat{D}_R \right) \right) (\mathrm{mod}\ 1) \approx (\Delta\hat{\Phi}_{IT} + \Delta\hat{\varepsilon}_{TR}\overline{D}_R + \hat{\varepsilon}_{TR}\Delta\hat{D}_R)(\mathrm{mod}\ 1).$$

17. The wireless communication device for ranging between other wireless communication devices of clause 10 wherein the wireless communication devices are configured as anchors for DL-TDOA operation and a TDOA delta is calculated by way of the baseband processor using the equation $\Delta \widehat{T}_D^I = \left( \Delta \widehat{\Phi}_{IT} + \Delta \hat{\epsilon}_{TR} \overline{D}_R \right) (\mathrm{mod}\ 1)$.

18. The wireless communication device for ranging between other wireless communication devices of clause 10 wherein the wireless communication devices are configured as anchors for DL-TDOA operation and a TDOA delta is calculated by way of the baseband processor using the equation $\Delta \widehat{T}_D^I = \Delta \widehat{\Phi}_{IT}\ (\mathrm{mod}\ 1)$.

19. A method of time-of-flight (TOF) ranging between wireless devices comprising:

- performing by way of the wireless devices a double-sided two-way ranging (DS-TWR) exchange between the wireless devices;
- determining by way of a processor of at least one of the wireless devices a first path angle of an initiator of one of the wireless devices, a response delay of the responder of one of the wireless devices, a first path angle of the responder, and a delay due to the initiator;
- determining by way of the processor a single DS-TWR delay;
- calculating by way of the processor a TOF delta from the determined information; and
- calculating by way of the processor a TOF by way of the TOF delta with the single DS-TWR delay.

20. The method of TOF ranging between wireless devices of clause 19 wherein the TOF delta is calculated by way of the processor using the equation $\Delta \widehat{T}_F^{DS} = \Delta \left( \hat{k}_I \widehat{\Phi}_I + \hat{k}_R \widehat{\Phi}_R \right)(\mathrm{mod}\ 1)$.

21. The method of TOF ranging between wireless devices of clause 19 wherein the TOF delta is calculated by way of the processor using the equation $\Delta \hat{T}_F^{DS} = \bar{k}_I \Delta \hat{\Phi}_I (\mathrm{mod}\ 1) + k_R \Delta \hat{\Phi}_R (\mathrm{mod}\ 1)$.

22. The method of TOF ranging between wireless devices of clause 19 wherein a TDOA delta is calculated by way of the processor using the equation $\hat{T}_D^{DS} = \sum \left( \Delta \hat{T}_D^{DS} \left( \mathrm{mod}\ \frac{1}{2} \right) \right)$.

23. The method of TOF ranging between wireless devices of clause 19 wherein a TDOA delta is calculated by way of the processor using the equation $\Delta \hat{T}_D^{DS} = \bar{k}_I \left( \Delta \hat{\Phi}_{IT} + \frac{\Delta \hat{\Phi}_I}{2} \right) \left( \mathrm{mod}\ \frac{1}{2} \right) - \bar{k}_R \left( \Delta \hat{\Phi}_{RT} + \frac{\Delta \hat{\Phi}_R}{2} \right) \left( \mathrm{mod}\ \frac{1}{2} \right)$.

24. A wireless communication device for time-of-flight (TOF) ranging between other wireless communication devices comprising:

- receive circuitry configured to receive radio frequency (RF) signals;
- transmit circuitry configured to modulate a carrier signal with encoded data; and
- a baseband processor configured to:

  - process a digitized version of the RF signals received by the receive circuitry and to extract the information or data bits conveyed in the received RF signals;
  - determine a first path angle of an initiator of one of the wireless communication devices, a response delay of a responder of one of the wireless communication devices, a first path angle of the responder, and a delay due to the initiator;
  - determine a single double-sided two-way ranging (DS-TWR) delay;
  - calculate a TOF delta from the determined information; and
  - calculate a TOF using the TOF delta with the single DS-TWR delay.

25. The wireless communication device TOF ranging between other wireless communication devices of clause 24 wherein the TOF delta is calculated by way of the baseband processor using the equation $\Delta \hat{T}_F^{DS} = \Delta \left( \hat{k}_I \hat{\Phi}_I + \hat{k}_R \hat{\Phi}_R \right) (\mathrm{mod}\ 1)$.

26. The wireless communication device TOF ranging between other wireless communication devices of clause 24 wherein the TOF delta is calculated by way of the baseband processor using the equation $\Delta \hat{T}_F^{DS} = \bar{k}_I \Delta \hat{\Phi}_I (\mathrm{mod}\ 1) + \bar{k}_R \Delta \hat{\Phi}_R (\mathrm{mod}\ 1)$.

27. The wireless communication device TOF ranging between other wireless communication devices of clause 24 wherein the TDOA delta is calculated by way of the baseband processor using the equation $\hat{T}_D^{DS} = \sum \left( \Delta \hat{T}_D^{DS} \left( \mathrm{mod}\ \frac{1}{2} \right) \right)$.

28. The wireless communication device TOF ranging between other wireless communication devices of clause 24 wherein the TDOA delta is calculated by way of the baseband processor using the equation $\Delta \hat{T}_D^{DS} = \bar{k}_I \left( \Delta \hat{\Phi}_{IT} + \frac{\Delta \hat{\Phi}_I}{2} \right) \left( \mathrm{mod}\ \frac{1}{2} \right) - \bar{k}_R \left( \Delta \hat{\Phi}_{RT} + \frac{\Delta \hat{\Phi}_R}{2} \right) \left( \mathrm{mod}\ \frac{1}{2} \right)$.

**Claims**

1. A method of time-of-flight (TOF) ranging between wireless devices, the method comprising:

    performing by way of the wireless devices a single-sided two-way ranging (SS-TWR) exchange between the wireless devices;

determining by way of a processor of at least one of the wireless devices a first path angle, a relative carrier frequency offset of an initiator of one of the wireless devices and a responder of one of the wireless devices, and response delay of the responder;
determining by way of the processor a single SS-TWR delay;
calculating by way of the processor a TOF delta from the determined information; and
calculating by way of the processor a TOF by way of the TOF delta with the single SS-TWR delay.

2. The method of claim 1 further comprising:

measuring a plurality of measured carrier frequency offsets (CFOs) by way of one or both of the wireless devices;
estimating a CFO between the two wireless devices using a filter to filter the measured CFOs to generate an estimated CFO; and
adjusting the timing measurement based on the estimated CFO to improve range estimation accuracy.

3. The method of claim 1 or 2, wherein the TOF delta is calculated by way of the processor using:

the equation $\Delta \hat{T}_F^I = \left( \Delta\hat{\Phi}_I + \Delta\left(\hat{\epsilon}_{RI}\hat{D}_R\right)\right)(\mathrm{mod}\ 1) \approx \left(\Delta\hat{\Phi}_I + \Delta\hat{\epsilon}_{RI}\,\overline{D}_R + \hat{\epsilon}_{RI}\Delta\hat{D}_R\right)(\mathrm{mod}\ 1)$ ;

the equation $\Delta\hat{T}_F^I = \left(\Delta\hat{\Phi}_I + \Delta\hat{\epsilon}_{RI}\,\overline{D}_R\right)(\mathrm{mod}\ 1)$ ; or

the equation $\Delta\hat{T}_F^I = \Delta\hat{\Phi}_I\ (\mathrm{mod}\ 1)$ .

4. The method of any preceding claim wherein the wireless devices are configured as anchors for downlink time difference of arrival (DL-TDOA) operation and a TDOA delta is calculated by way of the processor using:

the equation $\Delta\hat{T}_D^I = \left(\Delta\hat{\Phi}_{IT} + \Delta\left(\hat{\epsilon}_{TR}\hat{D}_R\right)\right)(\mathrm{mod}\ 1) \approx \left(\Delta\hat{\Phi}_{IT} + \Delta\hat{\epsilon}_{TR}\overline{D}_R + \hat{\epsilon}_{TR}\Delta\hat{D}_R\right)(\mathrm{mod}\ 1)$ ;

the equation $\Delta\hat{T}_D^I = \left(\Delta\hat{\Phi}_{IT} + \Delta\hat{\epsilon}_{TR}\overline{D}_R\right)(\mathrm{mod}\ 1)$ ; or

the equation $\Delta\hat{T}_D^I = \Delta\hat{\Phi}_{IT}\ (\mathrm{mod}\ 1)$ .

5. A wireless communication device for time-of-flight (TOF) ranging between other wireless communication devices, the wireless communication device comprising:

receive circuitry configured to receive radio frequency (RF) signals;
transmit circuitry configured to modulate a carrier signal with encoded data; and
a baseband processor configured to:

process a digitized version of the RF signals received by the receive circuitry and to extract the information or data bits conveyed in the received RF signals;
determine a first path angle, a relative carrier frequency offset of an initiator of one of the wireless communication devices and a responder of one of the wireless communication devices, and a response delay of the responder;
determine a single single-sided two-way ranging (SS-TWR) delay;
calculate a TOF delta from the determined information; and
calculate a TOF using the TOF delta with the single SS-TWR delay.

6. The wireless communication device of claim 5, wherein the baseband processor is further configured to:

measure a plurality of measured carrier frequency offsets (CFOs);
estimate a CFO between the two wireless communication devices using a filter to filter the measured CFOs to generate an estimated CFO; and
adjust the timing measurement based on the estimated CFO to improve range estimation accuracy.

7. The method of any of claims 2 to 4, or the wireless communication device of claim 5 or 6, wherein the filter is an exponential moving average filter.

8. The wireless communication device of any of claims 5 to 7, wherein the TOF delta is calculated by way of the baseband processor using:

the equation $\Delta \widehat{T}_F^I = \left(\Delta \widehat{\Phi}_I + \Delta\left(\hat{\epsilon}_{RI}\widehat{D}_R\right)\right) (\text{mod } 1) \approx \left(\Delta \widehat{\Phi}_I + \Delta\hat{\epsilon}_{RI}\, \overline{D}_R + \hat{\epsilon}_{RI}\Delta\widehat{D}_R\right)(\text{mod } 1)$;

the equation $\Delta \widehat{T}_F^I = \left(\Delta \widehat{\Phi}_I + \Delta\hat{\epsilon}_{RI}\, \overline{D}_R\right)(\text{mod } 1)$; or

the equation $\Delta \widehat{T}_F^I = \Delta \widehat{\Phi}_I\,(\text{mod } 1)$.

9. The wireless communication device of any of claims 5 to 8, wherein the wireless communication devices are configured as anchors for downlink time difference of arrival (DL-TDOA) operation and a TDOA delta is calculated by way of the baseband processor using:

the equation $\Delta \widehat{T}_D^I = \left(\Delta \widehat{\Phi}_{IT} + \Delta\left(\hat{\epsilon}_{TR}\widehat{D}_R\right)\right)(\text{mod } 1) \approx \left(\Delta \widehat{\Phi}_{IT} + \Delta\hat{\epsilon}_{TR}\overline{D}_R + \hat{\epsilon}_{TR}\Delta\widehat{D}_R\right)(\text{mod } 1)$;

the equation $\Delta \widehat{T}_D^I = \left(\Delta \widehat{\Phi}_{IT} + \Delta\hat{\epsilon}_{TR}\overline{D}_R\right)(\text{mod } 1)$; or

the equation $\Delta \widehat{T}_D^I = \Delta \widehat{\Phi}_{IT}\,(\text{mod } 1)$.

10. A method of time-of-flight (TOF) ranging between wireless devices, the method comprising:

performing by way of the wireless devices a double-sided two-way ranging (DS-TWR) exchange between the wireless devices;
determining by way of a processor of at least one of the wireless devices a first path angle of an initiator of one of the wireless devices, a response delay of the responder of one of the wireless devices, a first path angle of the responder, and a delay due to the initiator;
determining by way of the processor a single DS-TWR delay;
calculating by way of the processor a TOF delta from the determined information; and
calculating by way of the processor a TOF by way of the TOF delta with the single DS-TWR delay.

11. The method of claim 10, wherein the TOF delta is calculated by way of the processor using:

the equation $\Delta \widehat{T}_F^{DS} = \Delta\left(\hat{k}_I\widehat{\Phi}_I + \hat{k}_R\widehat{\Phi}_R\right)(\text{mod } 1)$; or

the equation $\Delta \widehat{T}_F^{DS} = \bar{k}_I\Delta\widehat{\Phi}_I(\text{mod } 1) + \bar{k}_R\Delta\widehat{\Phi}_R(\text{mod } 1)$.

12. The method of claim 10 or 11, wherein a TDOA delta is calculated by way of the processor using:

the equation $\widehat{T}_D^{DS} = \sum\left(\Delta\widehat{T}_D^{DS}\left(\text{mod }\frac{1}{2}\right)\right)$; or

the equation $\Delta\widehat{T}_D^{DS} = \bar{k}_I\left(\Delta\widehat{\Phi}_{IT} + \frac{\Delta\widehat{\Phi}_I}{2}\right)\left(\text{mod }\frac{1}{2}\right) - \bar{k}_R\left(\Delta\widehat{\Phi}_{RT} + \frac{\Delta\widehat{\Phi}_R}{2}\right)\left(\text{mod }\frac{1}{2}\right)$.

13. A wireless communication device for time-of-flight (TOF) ranging between other wireless communication devices, the wireless communication device comprising:

receive circuitry configured to receive radio frequency (RF) signals;
transmit circuitry configured to modulate a carrier signal with encoded data; and
a baseband processor configured to:

process a digitized version of the RF signals received by the receive circuitry and to extract the information or data bits conveyed in the received RF signals;
determine a first path angle of an initiator of one of the wireless communication devices, a response delay of a responder of one of the wireless communication devices, a first path angle of the responder, and a delay due to the initiator;
determine a single double-sided two-way ranging (DS-TWR) delay;
calculate a TOF delta from the determined information; and
calculate a TOF using the TOF delta with the single DS-TWR delay.

**14.** The wireless communication device of claim 13, wherein the TOF delta is calculated by way of the baseband processor using:

the equation $\Delta\widehat{T}_F^{DS} = \Delta\big(\widehat{k}_I\widehat{\Phi}_I + \widehat{k}_R\widehat{\Phi}_R\big)(\text{mod } 1)$;

the equation $\Delta\widehat{T}_F^{DS} = \overline{k}_I\Delta\widehat{\Phi}_I(\text{mod } 1) + \overline{k}_R\Delta\widehat{\Phi}_R(\text{mod } 1)$; or

the equation $\widehat{T}_D^{DS} = \Sigma\Big(\Delta\widehat{T}_D^{DS}\Big(\text{mod }\frac{1}{2}\Big)\Big)$.

**15.** The wireless communication device of claim 13 or 14, wherein the TDOA delta is calculated by way of the baseband processor using the equation $\Delta\widehat{T}_D^{DS} = \overline{k}_I\Big(\Delta\widehat{\Phi}_{IT} + \frac{\Delta\widehat{\Phi}_I}{2}\Big)\Big(\text{mod }\frac{1}{2}\Big) - \overline{k}_R\Big(\Delta\widehat{\Phi}_{RT} + \frac{\Delta\widehat{\Phi}_R}{2}\Big)\Big(\text{mod }\frac{1}{2}\Big)$.

FIGURE 1

FIGURE 2

FIGURE 3

FIGURE 4

| | Range STD (mm) | |
|---|---|---|
| Channel | 9 | 5 |
| Initiator SS-TWR SHR | 1.37 | 1.41 |
| Initiator SS-TWR STS | 1.30 | 1.39 |
| Responder SS-TWR SHR | 1.10 | 1.13 |
| Responder SS-TWR STS | 0.99 | 1.03 |
| DS-TWR SHR | 0.66 | 0.76 |
| DS-TWR STS | 0.53 | 0.70 |

FIGURE 5

FIGURE 6

| SYNCHRONIZATION HEADER (SHR) | SCRAMBLED TIMESTAMP SEQUENCE (STS) | PHYSICAL LAYER HEADER (PHR) | PHYSICAL LAYER SERVICE DATA UNIT (PSDU) |
|---|---|---|---|

FIGURE 7

FIGURE 8

FIGURE 9

EP 4 431 982 A1

FIGURE 10

EP 4 431 982 A1

FIGURE 11

FIGURE 12

FIGURE . 13

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/326403 A1 (ROMME JAC [NL] ET AL) 15 October 2020 (2020-10-15) * figure 1B and 3 * * paragraph [0004] - paragraph [0006] * * paragraph [0091] - paragraph [0095] * ----- | 1-15 | INV. G01S13/82 G01S13/76 G01S13/84 |
| A | KRSKA JOSEF ET AL: "Utilization of Carrier-Frequency Offset Measurements in UWB TDoA Positioning with Receiving Tag", SENSORS, vol. 23, no. 5, 26 February 2023 (2023-02-26), page 2595, XP093187456, CH ISSN: 1424-8220, DOI: 10.3390/s23052595 Retrieved from the Internet: URL:https://www.mdpi.com/1424-8220/23/5/2595/pdf> * page 6 * ----- | 2,7 | |

| TECHNICAL FIELDS SEARCHED (IPC) |
|---|
| G01S |

The present search report has been drawn up for all claims

| Place of search | Date of completion of the search | Examiner |
|---|---|---|
| Munich | 19 July 2024 | Bomart, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 3304

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2024

| Patent document cited in search report | Publication date | Patent family member(s) | Publication date |
|---|---|---|---|
| US 2020326403 A1 | 15-10-2020 | EP 3722831 A1<br>US 2020326403 A1 | 14-10-2020<br>15-10-2020 |

EPO FORM P0459

For more details about this annex : see Official Journal of the European Patent Office, No. 12/82

**EP 4 431 982 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 63489863 A